# EUROPEAN PATENT APPLICATION

(11) **EP 1 884 630 A1**
(43) Date of publication of application: **06.02.2008**
(21) Application number: 07015317.6
(22) Date of filing: 03.08.2007
(51) Int. Cl.: F01L 3/08, F16J 15/32

(54) **Valve stem seal**

(30) Priority: 04.08.2006 JP 2006212996
(71) Applicant: Carl Freudenberg KG, 69469 Weinheim (DE)
(72) Inventor: Kobayashi, Mitsugu, Fukushima-shi Fukushima 960-1193 (JP)

(57) **Abstract**

A valve stem seal (1) installed for sealing an annular space (4) between a valve guide (2) having one end facing a cam side (A) and the other end facing a cylinder side (B), and a valve stem (3) coaxially arranged in an inner peripheral side of the valve guide (2) so as to reciprocate therein, whereby the valve stem seal (1) is provided with a reinforcing ring (10) fitted to the valve guide (2) and having a radially extending portion (12), a main seal lip (41) slidably brought into close contact with the valve stem (3) and extending toward the cam side (A), and a back pressure projection (50) positioned on the cylinder side (B) rather than the main seal lip (41), extending in a radial direction and slidably brought into close contact with the valve stem (3), and a leading end portion (51) of the back pressure projection (50) has a predetermined distance in an axial direction between it and the radially extending portion (12).

## Description

### BACKGROUND OF THE INVENTION

### Field of the Invention

The present invention relates to a valve stem seal which is installed to a valve guide in a valve gear mechanism of an internal combustion engine.

### Description of the Related Art

As a valve stem seal which is installed for sealing an annular space between a valve guide and a valve stem in a valve gear mechanism of an internal combustion engine, the following valve stem seals are known.

A valve stem seal is installed for sealing an annular space between a valve guide fixed to a through hole formed in an inner peripheral side of a cylinder head and having one end facing a cam side and the other end facing a cylinder side, and a valve stem coaxially inserted in an inner peripheral side of the valve guide so as to reciprocate therein and having a valve attached to it on the cylinder side for performing an intaking and exhausting operation. Further, the valve stem seal is provided with a reinforcing ring and a main seal lip, and is installed by fitting the reinforcing ring to the valve guide, so the lubricating oil on the cam side is sealed from flowing out toward the cylinder side and an appropriate amount of the lubricating oil is supplied to such an extent that a film of oil is formed in the annular space to thereby control the amount of leaking lubricating oil, by allowing the main seal lip to slidably contact a peripheral surface of the valve stem.

In recent years, along with a trend of providing high-power engines, the pressure in the port (cylinder side) (hereinafter, called as back pressure) tends to increase, whereby the behavior of the main seal lip becomes unstable, and in a worst case, a trouble may occur in which the main seal lip may be raised from the valve stem, and thereby there has been a problem that a required amount of leaking oil cannot be kept up. Therefore, as shown in JP 2004 019852 A a back pressure seal lip is disposed on the cylinder side of the main seal lip, separately from the main seal lip, and the back pressure is born by means of the back pressure seal lip, and thereby the behavior of the main seal lip due to the back pressure is suppressed, and a variation of the amount of leaking oil has been intended to be suppressed. However, in the circumstances in which a compact sizing of the engines is advanced and an installation space for the valve stem seal is narrowed, if the back pressure seal lip having a leading end portion extending toward the cylinder side is disposed on the cylinder side of a radially extending portion of the reinforcing ring separately from the main seal lip, the valve stem seal is elongated in the axial direction, resulting in an occurrence of a trouble that the valve stem seal is not able to satisfy the demand of the compact structure of the enginenes.

Incidentally, in below-described JP 2005 201313, it is disclosed that an annular weir portion for holding grease formed by a minute clearance in a radial direction between the peripheral surface of the valve stem and the main seal lip, is provided on a cylinder side of the main seal lip. It is known that a lip portion formed from an elastic foam having a shape elongated in the axial direction so that the lubricating oil can be included, is separately provided at the cylinder side via a holding tag, whereas the same is integrally molded with a main seal lip, so as to secure an appropriate amount of lubricating oil in an annular space at a time when the valve stem seal is installed, or the like. The known valve stem seals are not configured to reduce a length in the axial direction in correspondence to the demand of a compact structure of the engine while having a function to exclude the back pressure.

### SUMMARY OF THE INVENTION

In consideration of the above-described points, it is an object of the present invention to provide a valve stem seal having a function for excluding an influence of a back pressure to a main seal lip, and capable of being installed to a place having a narrow installation space in correspondence to a demand of a compact structure of the engine in a valve stem seal installed to a valve guide in a valve gear mechanism of an internal combustion engine.

In order to achieve the above-described object, a valve stem seal according to the present invention is installed for sealing an annular space between a valve guide having one end facing a cam side and the other side facing a cylinder side, and a valve stem coaxially arranged in an inner peripheral side of the valve guide so as to reciprocate therein, and is characterized in that the valve stem seal is provided with a reinforcing ring fitted to the valve guide and having a radially extending portion, a main seal lip slidably brought into close contact with the valve stem and extending toward the cam side, and a back pressure projection positioned on the cylinder side in relation to the main seal lip, extending in a radial direction and slidably brought into close contact with the valve stem, and a leading end portion of the back pressure projection has a predetermined distance in an axial direction between it and the radially extending portion.
The present invention accomplishes the following advantages. That is, in the valve stem seal according to the present invention provided with the above-described construction, since the back pressure projection is disposed at a position situated nearer the cylinder side in relation to the main seal lip, it is possible to exclude an influence of the back pressure to the main seal lip, and since the back pressure projection is formed in a manner so as to extend in the radial direction, it becomes possible to shorten the length of the back pressure projection in the axial direction compared to a back pressure seal lip whose leading end portion extends toward the cylinder side, and the back pressure projection can be installed to a place having a narrow installation space, in which a compact sizing of the engine is advanced.
Further, since the leading end portion of the back pressure projection has a predetermined distance in the axial direction between it and the radially extending portion of the reinforcing ring, the back pressure projection is configured to be able to have a fastening margin when the back pressure is exerted from the cylinder side, and a deformation stress can be prevented from being excessively applied to the back pressure projection, and it becomes possible to improve durability of the back pressure projection.

### BRIEF DESCRIPTION OF THE DRAWINGS

Hereinbelow, a preferred embodiment of the present invention will be explained by way of an example, with reference to the drawings.

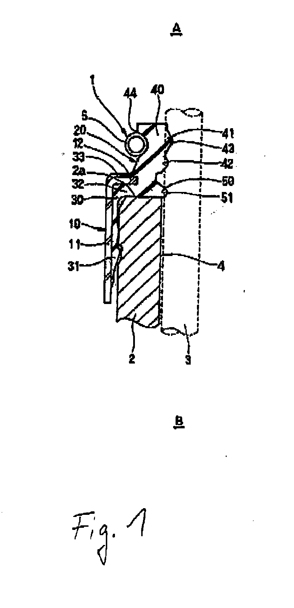

FIG. 1 is a cross-sectional view of a main part of a valve stem seal when installed according to the present invention;

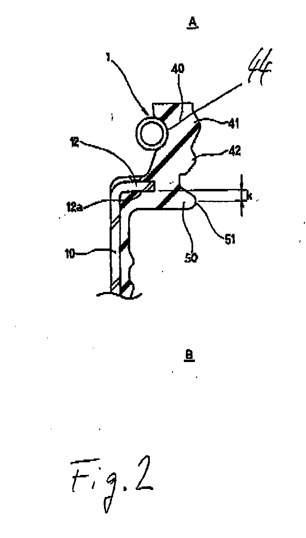

FIG. 2 is a partially enlarged cross-sectional view of the valve stem seal of figure 1.

### DESCRIPTION OF THE PREFERRED EMBODIMENTS

A valve stem seal 1 according to the present invention is installed for sealing an annular space 4 between a valve guide 2 having one end facing a cam side A and the other end facing a cylinder side B, and a valve stem 3 coaxially arranged in an inner peripheral side of the valve guide 2 so as to reciprocate therein and having a valve (not shown) attached to it on the cylinder side B for performing an intaking and exhausting operation, and the valve stem seal 1 is also provided with a reinforcing ring 10, a main seal lip 41, and a back pressure projection 50. The reinforcing ring 10 is formed from a sheet metal or the like, and is composed of an axially extending portion 11 fitted to the outer peripheral side of the valve guide 2, and a radially extending portion 12 extending from the end of the axially extending portion 11 on the cam side A in the radially inner direction. A seal main body 20 formed from a rubber-like elastic element, which has a fixing sealing portion 30, a seal portion 40 having the main seal lip 41, and the back pressure projection 50, integrally formed with each other, is fixed to the reinforcing ring 10, as described below. The fixing sealing portion 30 is formed from an inner peripheral side fixing sealing portion 31, which is fixed to the axially extending portion 11 of the reinforcing ring 10 on the inner peripheral side and is brought into close contact with the outer peripheral surface of the valve guide 2, a cylinder side fixing sealing portion 32, which is fixed to the radially extending portion 12 on the cylinder side B thereof and is brought into close contact with the cam side end surface 2a of the valve guide 2, and a cam side fixing sealing portion 33, which is fixed to the radially extending portion 12 on the cam side A. The seal portion 40 has the main seal lip 41 extending from the inner peripheral end portion of the radially extending portion 12 to the cam side A and slidably brought into close contact with the valve stem 3, and a sub-seal lip 42 positioned on the cylinder side B in relation to the main seal lip 41, integrally formed with each other. The main seal lip 41 has a concave portion 44 formed on the outer peripheral side thereof, which is on the other side of a lip leading end 43, for installing a garter spring 5 therein for applying a tension force to the main seal lip 41 so that the same can follow a fluctuation of the valve stem 3 in the radial direction. The back pressure projection 50 is positioned on the cylinder side B in relation to the radially extending portion 12 of the reinforcing ring 10, is an end portion of the seal portion 40 on the cylinder side B, and is formed to extend in the radially inner direction from the inner peripheral side of the cylinder side fixing sealing portion 32, so that a leading end portion 51 thereof is configured to be slidably brought into close contact with the valve stem 3. The leading end portion 51 has a predetermined distance k in an axial direction between it and a cylinder side end surface 12a of the radially extending portion 12 and thereby the back pressure projection 50 is configured to be able to have a fastening margin when the back pressure is applied from the cylinder side B. The valve stem seal 1 constructed as described above is installed in a manner such that the axially extending portion 11 of the reinforcing ring 10 is fitted to the valve guide 2 via the inner peripheral side fixing sealing portion 31, the seal portion 40 having the main seal lip 41 is slidably brought into close contact with the valve stem 3, and the back pressure projection 50 is slidably brought into close contact with the valve stem 3, so the seal portion 40 can seal the lubricating oil on the cam side A from flowing out toward the cylinder side B and allows an appropriate amount of the lubricating oil to be supplied to such an extent that a film of oil is formed in the annular space 4, to thereby control the amount of leaking lubricating oil. In this case, since the back pressure projection 50 is disposed at a position on the cylinder side B in relation to the seal portion 40, it becomes possible to exclude an influence of the back pressure to the seal portion 40 having the main seal lip 41 by means of the back pressure projection 50 when the back pressure is exerted from the cylinder side B, and to control the oil leaking amount. Further, since the back pressure projection 50 is formed in a manner such that the leading end portion 51 extends in the radial direction, the length thereof in the axial direction can be made shorter than that of a conventional back pressure seal lip whose leading end portion extends toward a cylinder side, and it becomes possible to form the valve stem seal 1 to be compact sized. Furthermore, since the leading end portion 51 of the back pressure projection 50 has the predetermined distance k in the axial direction between it and the cylinder side end surface 12a of the radially extending portion 12 of the reinforcing ring 10, the back pressure projection 50 is able to have the fastening margin when a back pressure is applied. Thereby, a deformation stress can be prevented from being excessively applied to the back pressure projection 50, and it becomes possible to improve durability of the back pressure projection 50.

## Claims

1. A valve stem seal (1) installed for sealing an annular space (4) between a valve guide (2) having one end facing a cam side (A) and the other end facing a cylinder side (B), and a valve stem (3) coaxially arranged in an inner peripheral side of the valve guide (2) so as to reciprocate therein, whereby the valve stem seal (1) is provided with a reinforcing ring (10) fitted to the valve guide (2) and having a radially extending portion (12), a main seal lip (41) slidably brought into close contact with the valve stem (3) and extending toward the cam side (A), and a back pressure projection (50) positioned on the cylinder side (B) rather than the main seal lip (41), extending in a radial direction and slidably brought into close contact with the valve stem (3), and a leading end portion (51) of the back pressure projection (60) has a predetermined distance (k) in an axial direction between it and the radially extending portion (12).
